# EUROPÄISCHE PATENTANMELDUNG

(11) **EP 4 521 000 A1**
(43) Veröffentlichungstag der Anmeldung: **12.03.2025**
(21) Anmeldenummer: 22940558.4
(22) Anmeldetag: 05.05.2022
(51) Int. Cl.: F16H 57/04, F16H 57/08, F03D 80/70

(54) **PLANETENGETRIEBE UND WINDKRAFTANLAGE**

(71) Anmelder: Schaeffler Technologies AG & Co. KG, 91074 Herzogenaurach (DE)
(72) Erfinder: HAN, Huimin, Suzhou, Jiangsu 215400 (CN); PLOGMANN, Michael, 91074 Herzogenaurach (DE); LIU, Jixuan, Shanghai 200336 (CN); CHEN, Xiangke, Shanghai 201804 (CN)
(86) Internationale Anmeldenummer: PCT/CN2022/090958
(87) Internationale Veröffentlichungsnummer: WO 2023/212862

(57) **Zusammenfassung**

Die vorliegende Erfindung betrifft ein Planetengetriebe für eine Windenergieanlage, das eine Planetenwelle (10), ein Planetenrad (40) und einen Planetenträger (50) aufweist, wobei das Planetenrad (40) und der Planetenträger (50) an der Planetenwelle (10) montiert sind, wobei die Umfangsfläche der Planetenwelle (10) in Kontakt mit dem Planetenrad (40) in einen tragenden Bereich und einen nichttragenden Bereich unterteilt sein kann, wobei auf der Umfangsfläche mindestens eine Hydraulikölkammer (101) in axialer Richtung angeordnet ist, und die Hydraulikölkammer (101) innerhalb des nichttragenden Bereichs angeordnet ist. Die vorliegende Erfindung betrifft zudem ferner eine Windenergieanlage mit dem oben beschriebenen Planetengetriebe.

## Beschreibung

Die vorliegende Erfindung betrifft ein Planetengetriebe, das im Windenergiegebiet zur Anwendung kommt. Konkret handelt es sich um eine Planetenwelle, die im Planetengetriebe zur Anwendung kommt.

Mit der Entwicklung der Offshore-Windenergie sind große Windturbinen der Megawattklasse der Trend der zukünftigen Entwicklung, und mit der Senkung der Energiekosten sind die Anforderungen an die Kosten und die Betriebszuverlässigkeit des Getriebes anspruchsvoller, während das Lager eine kritische Komponente im Getriebe ist, so dass die Anforderungen an die Größe und die Tragfähigkeit des Lagers höher sind. Der Ausfall von Wälzlagern führt zum Ausfall des Windenergiegetriebes, was eine Verschwendung von viel Reparaturzeit und -kosten zur Folge hat.

WO 03/014 567 A1 offenbart eine Windenergieanlage, die eine drehbar an einem Turm montierte Gondel mit einem Generator zur Stromerzeugung, einen windgetriebenen Rotor mit einer mindestens zwei Rotorblätter tragenden Rotornabe sowie ein großes, den Rotor tragendes Wälzlager umfasst. Das große Wälzlager ist weiterhin mit einem Planetenradgetriebe verbunden, das mit dem Generator in der Gondel verbunden ist und in bekannter Weise aus einem Hohlrad mit einer umlaufenden Innenverzahnung, mehreren an einem Planetenradträger gelagerten Planetenrädern sowie einem mittleren Sternrad besteht, indem der innere Lagerring der beiden Lagerringe des großen Wälzlagers durch eine Presssitzverbindung auf einer Mantelfläche des Hohlrades des Planetenradgetriebes fixiert ist. Darüber hinaus offenbart EP 811 764 A1 auch, dass die Verbindung des großen Wälzlagers mit dem Planetenradgetriebe so realisiert ist, dass der innere Lagerring der beiden Lagerringe des großen Wälzlagers an einen mit der Rotornabe verbundenen und den Planetenradträger tragenden Ring gedrückt wird.

Die Windenergieanlage nach dem Stand der Technik hat den Nachteil, dass das große Wälzlager und das nachgeschaltete Planetenradgetriebe aus relativ vielen Einzelteilen bestehen und dadurch einerseits sehr kostenaufwendig in der Herstellung sind und andererseits ein relativ hohes Gesamtgewicht aufweisen, wodurch dieses Gesamtgewicht bei ihrer Montage in einer Gondel mit einer Höhe von 120 m oder niedriger viele Nachteile mit sich bringt. Außerdem müssen das Hohlrad des Planetenradgetriebes und der innere Lagerring des großen Wälzlagers mindestens einen Außendurchmesser bzw. Innendurchmesser von 2 m oder mehr aufweisen. Aufgrund ihrer sehr maßhaltigen Herstellung können die negativen Auswirkungen auf die Funktion des Zapfens oder auf die Verzahnung des Planetenradgetriebes, die durch eine positive Überpassung bei der Presssitzverbindung zwischen dem inneren Lagerring und dem Hohlrad bzw. durch eine noch zu festigende Passung verursacht werden, zwar zuverlässig ausgeschlossen werden, aber es kommt infolge des vorhandenen Spiels im Betrieb noch zu einer Bewegung der Planetenräder, wodurch eine relativ hohe radiale Belastung auf die Planetenwelle entsteht, was leicht zu Schäden der Teile führt. Außerdem fließt im Leerlauf der Windenergieanlage kein Schmieröl in der Anlage, da das hydrodynamische System nicht aktiviert ist, was die Reibung leicht erhöht und somit die Lebensdauer der Teile verkürzt.

Die durch die vorliegende Erfindung zu lösende technische Aufgabe besteht daher darin, ein Planetengetriebe bereitzustellen, das die oben beschriebenen Nachteile nach dem Stand der Technik beheben kann.

Die technische Aufgabe wird durch ein erfindungsgemäß ausgestaltetes Planetengetriebe für eine Windenergieanlage gelöst. Das Planetengetriebe weist eine Planetenwelle, ein Planetenrad und einen Planetenträger auf, wobei das Planetenrad und der Planetenträger an der Planetenwelle montiert sind, wobei die Umfangsfläche der Planetenwelle in Kontakt mit dem Planetenrad in einen tragenden Bereich und einen nichttragenden Bereich unterteilt sein kann, wobei auf der Umfangsfläche mindestens eine Hydraulikölkammer in axialer Richtung angeordnet ist, und alle Hydraulikölkammern innerhalb des nichttragenden Bereichs angeordnet sind. Aufgrund des Montageprozesses und der Begrenzung der Schwerkraft wird nach der Montage des Planetenrades an der Planetenwelle ein Teil des Umfangsbereichs der Planetenwelle belastet, so dass die Umfangsfläche der Planetenwelle in einen tragenden Bereich und einen nichttragenden Bereich unterteilt sein kann. Innerhalb des nichttragenden Bereichs ist eine Hydraulikölkammer in axialer Richtung angeordnet, wodurch sowohl die Bildung einer Spannungskonzentration innerhalb des tragenden Bereichs vermieden wird, als auch das in der Hydraulikölkammer gespeicherte Schmieröl im Leerlauf eine Schmierwirkung erzielen kann, um die Reibung im tragenden Bereich zu verringern und die Lebensdauer der Teile zu erhöhen.

Gemäß einer bevorzugten Ausführungsform der vorliegenden Erfindung sind auf der Umfangsfläche zwei Hydraulikölkammern angeordnet und die zwei Hydraulikölkammern sind in einem Umfangswinkel von 155° voneinander beabstandet, wodurch sowohl eine genügend große Fläche des tragenden Bereichs im Normalbetrieb sichergestellt wird, als auch eine zu kleine Fläche des tragenden Bereichs im umgekehrten Laufbetrieb vermieden wird, so dass keine Spannungskonzentration an den Rändern der Ölkammern entsteht. Es ist zu beachten, dass der Winkel von 155° ausgewählt wird, weil er nach einer großen Anzahl von Experimenten erhalten wird und eine relativ gute technische Wirkung aufweist. In der vorliegenden Erfindung wird der spezifische Wert des Winkels nicht streng beschränkt und der entsprechende Winkelbereich liegt innerhalb des Schutzumfangs der vorliegenden Erfindung, solange sichergestellt werden kann, dass die Fläche des tragenden Bereichs genügend groß ist und die Fläche des tragenden Bereichs im umgekehrten Laufbetrieb nicht zu klein ist.

Gemäß einer bevorzugten Ausführungsform der vorliegenden Erfindung kommuniziert die Hydraulikölkammer über eine radiale Ölbohrung mit einer axialen Ölbohrung, und die axiale Ölbohrung kommuniziert mit einer Öleintrittsbohrung. Dadurch kann für die Hydraulikölkammer das Schmieröl durch die innerhalb der Planetenwelle angeordnete axiale Ölbohrung bereitgestellt werden. Weiterhin ist es bevorzugt, dass die axiale Ölbohrung als Durchgangsbohrung ausgestaltet ist und die beiden axialen Enden der axialen Ölbohrung durch Verschlussschrauben verschlossen sind, um das Entfernen von Graten an der Bohrung zu erleichtern und den Anforderungen des anschließenden Beschichtungsprozesses zu genügen. Die so ausgestaltete Ölpfadkonstruktion ist einfach aufzubauen und leicht zu verarbeiten, was die Herstellungskosten reduziert.

Gemäß einer bevorzugten Ausführungsform der vorliegenden Erfindung ist auf der axialen Endfläche der Planetenwelle eine Markierung vorhanden, die sicherstellt, dass die Hydraulikölkammer bei der Montage den tragenden Bereich im Normalbetrieb meidet. Weiterhin ist es bevorzugt, dass auf der Umfangsfläche der Planetenwelle in Kontakt mit dem Planetenrad eine Modifikationszone vorhanden ist, insbesondere ist im Randbereich des Kontakts eine Modifikationszone vorgesehen. Die Modifikationszone bezeichnet eine Zone mit einer Sonderkonstruktion, so dass ein Ölfilm innerhalb des Kontaktbereichs zwischen dem Axialträger und dem Planetenrad gebildet ist, wodurch die Randspannungskonzentrationen unter der durch Kippen verursachten Last mit dem Öldruck besser reduziert werden und die Lebensdauer des Systems erhöht wird.

Gemäß einer bevorzugten Ausführungsform der vorliegenden Erfindung ist auf der gesamten Umfangsfläche der Planetenwelle eine umlaufende Ölwanne zur besseren Führung und Verteilung des Schmieröls angeordnet. Es ist weiter bevorzugt, dass nur in dem nichttragenden Bereich eine umlaufende Ölwanne zur Verbindung mit der Hydraulikölkammer angeordnet ist, so dass das Auftreten von Randspannungskonzentrationen in der umlaufenden Ölwanne im höheren Lastbetrieb vermieden werden kann, wodurch die effektive Kontaktfläche im tragenden Bereich vergrößert, das Risiko von Randspannungskonzentrationen in der axialen Ölwanne reduziert und gleichzeitig auch der Verschleiß an dem Funktionsbereich der Innenkreisfläche des Planetenrades reduziert werden kann. Es ist auch denkbar, dass die umlaufende Ölwanne eine Modifikationszone aufweist, wodurch das Risiko von Spannungskonzentrationen weiter verringert werden kann.

Gemäß einer bevorzugten Ausführungsform der vorliegenden Erfindung weist das Planetengetriebe ferner an den beiden axialen Enden des Planetenrades vorgesehene Axialträger auf, wobei auf der axialen Endfläche des Axialträgers in Kontakt mit dem Planetenrad eine Modifikationszone vorgesehen ist. Der Axialträger dient zum Tragen von axialen Belastungen von dem Planetenrad, und es kann sich bei dem Axialträger beispielsweise um Absatz, Lager oder Ringelement der Planetenwelle handeln. Mit der Modifikationszone ist ein Ölfilm innerhalb des Kontaktbereichs zwischen dem Axialträger und dem Planetenrad gebildet, um die Randspannungskonzentrationen zu reduzieren und die Lebensdauer der Teile zu erhöhen.

Darüber hinaus kann die durch die vorliegende Erfindung zu lösende technische Aufgabe ferner durch eine Windenergieanlage mit einem Planetengetriebe, das die zuvor beschriebenen technischen Merkmale umfasst, gelöst werden.

Die vorliegende Erfindung wird im Folgenden in Verbindung mit den beigefügten Zeichnungen näher beschrieben. In den Figuren werden mit denselben Bezugszeichen gleiche oder funktionsgleiche Komponenten bezeichnet. In den beigefügten Zeichnungen zeigt:
Figur 1 eine Schnittansicht eines erfindungsgemäß ausgestalteten Planetengetriebes;
Figur 2 eine perspektivische Ansicht einer erfindungsgemäß ausgestalteten Planetenwelle;
Figur 3 eine perspektivische Ansicht von Planetenwellen mit verschiedenen Ausgestaltungen von umlaufenden Ölwannen;
Figur 4 eine perspektivische Ansicht eines hydrodynamischen Axialgleitlagers.

Spezifische Ausführungsformen eines erfindungsgemäßen Planetengetriebes werden im Folgenden in Verbindung mit den beigefügten Zeichnungen erläutert. Die folgende detaillierte Beschreibung und die beigefügten Zeichnungen dienen zur beispielhaften Veranschaulichung der Prinzipien der vorliegenden Erfindung und die vorliegende Erfindung ist nicht auf die beschriebenen bevorzugten Ausführungsformen beschränkt, und der Schutzumfang der vorliegenden Erfindung ist durch die Ansprüche definiert.

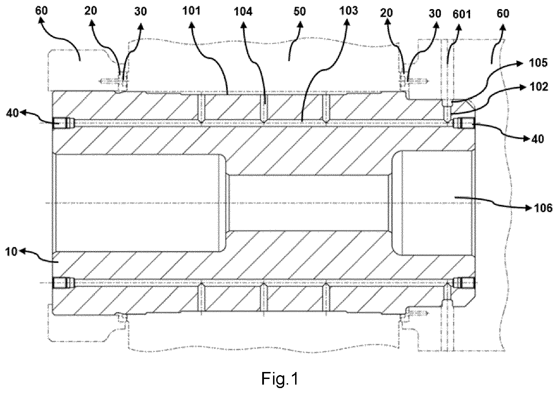

Figur 1 zeigt eine Schnittansicht eines erfindungsgemäß ausgestalteten Planetengetriebes mit einer Planetenwelle 10, wobei auf der Planetenwelle 10 ein hydrodynamisches Axialgleitlager 20, ein Planetenrad 50 und ein Planetenträger 60 montiert sind. Das hydrodynamische Axialgleitlager 20 ist über einen Stift 30 an dem Planetenträger 60 fixiert. Gemäß einer Ausgestaltung der vorliegenden Erfindung ist an einer axial geeigneten Position eine Hydraulikölkammer 101 angeordnet, wodurch das Spiel zwischen der Planetenwelle und dem Planetenrad geeignet vergrößert wird, so dass das Schmieröl leichter in den Funktionsbereich fließen kann. Wie in der Figur gezeigt, sind in der Ausführungsform der vorliegenden Erfindung zwei Hydraulikölkammern 101 vorgesehen, aber die Position und Anzahl der Hydraulikölkammern 101 sind nicht definiert. An dem Planetenträger 60 ist eine Öleintrittsbohrung 601 vorgesehen, wobei an einer der Öleintrittsbohrung 601 des Planetenträgers entsprechenden Stelle eine umlaufende Ölwanne 105, eine radiale Ölbohrung 102, eine axiale Ölbohrung 103 und eine mit der Hydraulikölkammer 101 kommunizierende radiale Ölbohrung 104 durch Verarbeitung vorgesehen sind. Um das Entfernen von Graten an den Bohrungen zu erleichtern und den Anforderungen des anschließenden Beschichtungsprozesses zu genügen, ist die axiale Ölbohrung 103 als Durchgangsbohrung ausgestaltet, und die beiden Seiten, nämlich die linke und die rechte Seite, werden nach der Reinigung des Ölpfads mit Verschlussschrauben 40 verschlossen. Es wird keine separate Ölrücklaufbohrung ausgestaltet und der Ölrücklauf erfolgt frei durch die Oberfläche der Welle. Darüber hinaus ist die Planetenwelle 10 zur Gewichtsreduzierung mit Hohlnuten 106 hohl ausgestaltet.

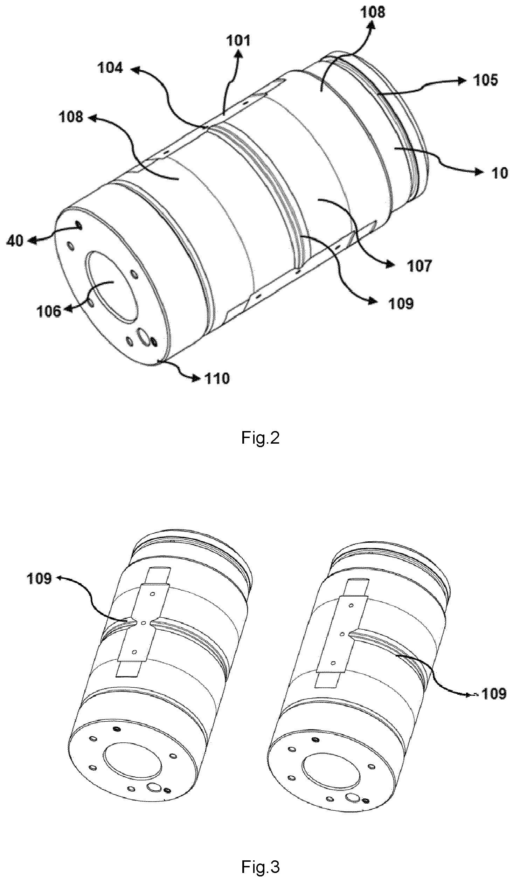

Figur 2 zeigt eine perspektivische Ansicht der Planetenwelle 10. Hierbei ist eine Ausgestaltung bevorzugt, in der zwei axiale Hydraulikölkammern 101 vorgesehen sind und die in einem Winkel von 155° voneinander beabstandet angeordnet sind, d. h., zwischen diesen beiden Hydraulikölkammern 101 sind ein tragender Bereich und ein nichttragender Bereich gebildet, wobei der nichttragende Bereich einen Umfangswinkel von 155° aufweist. In dieser Ausführungsform wird sowohl eine genügend große Fläche des tragenden Bereichs im Normalbetrieb sichergestellt, als auch eine zu kleine Fläche des tragenden Bereichs im umgekehrten Laufbetrieb vermieden, so dass keine Spannungskonzentration an den Rändern der Ölkammern entsteht, während das Öl in der Ölspeicherkammer während des Leerlaufs eine Schmierwirkung erzielen kann. Weiterhin ist es bevorzugt, dass auf der Endfläche der Planetenwelle 10 eine Markierung 110 vorgesehen ist, die sicherstellt, dass die Hydraulikölkammer bei der Montage den tragenden Bereich im Normalbetrieb meidet.

Darüber hinaus besteht der Funktionsbereich, in dem die Außenkreisfläche der Planetenwelle 10 mit dem Planetenrad 50 zusammenwirkt, aus drei Segmenten, wobei das mittlere als kreiszylindrische Fläche 107 ausgestaltet ist und am Viertel einer Seite eine modifiziert ausgestaltete Modifikationszone 108 und eine umlaufende Ölwanne 109 vorhanden sind, um die Randspannung zu reduzieren. Nach der FEA-Berechnungsanalyse kann diese Modifikationskonstruktion 108 die Randspannung erheblich reduzieren, wobei der Funktionsbereich eine gehärtete Beschichtung oder eine schmelzbeschichtete Bronzegalvanikschicht aufweist.

Figur 3 zeigt die perspektivischen Ansichten der Planetenwellen 10 in zwei Ausführungsformen. In der ersten, in Figur 3 links gezeigten Ausführungsform ist die umlaufende Ölwanne 109 an der Planetenwelle 10 auf der gesamten Umfangsfläche angeordnet, während in der zweiten, in Figur 3b gezeigten Ausführungsform die umlaufende Ölwanne 109 nur im nichttragenden Bereich angeordnet ist und eine Modifikationsausgestaltung aufweist, welche die Randspannungskonzentration in der umlaufenden Ölwanne 109 im höheren Lastbetrieb des Systems vermeiden kann.

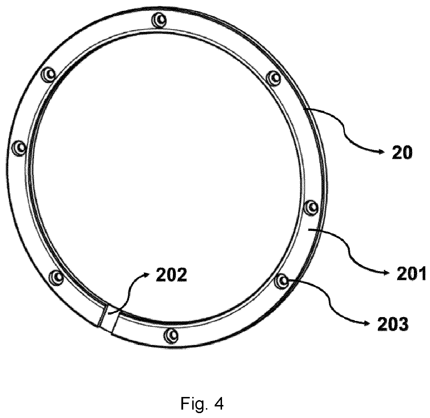

Figur 4 zeigt eine perspektivische Ansicht eines hydrodynamischen Axialgleitlagers 20, wobei auf der axialen Endfläche des hydrodynamischen Axialgleitlagers 20 eine Modifikationszone 201, eine Ölrücklaufwanne 202 und eine versenkte Bohrung 203 für den Bolzen zur Montage und Verbindung mit dem Planetenträger vorgesehen sind.

Obwohl mögliche Ausführungsformen in der vorstehenden Beschreibung beispielhaft beschrieben sind, versteht es sich, dass noch eine große Anzahl von Varianten von Ausführungsformen durch Kombinationen aller bekannten und weiterhin für den Fachmann leicht denkbaren technischen Merkmale und Ausführungsformen vorhanden ist. Darüber hinaus versteht es sich auch, dass die beispielhaften Ausführungsformen nur als Beispiele dienen und solche Ausführungsformen in keiner Weise den Schutzumfang, die Anwendung und den Aufbau der vorliegenden Erfindung beschränken. Durch die vorstehende Beschreibung wird vielmehr für den Fachmann eine technische Anleitung für die Umsetzung mindestens einer beispielhaften Ausführungsform bereitgestellt, wobei verschiedene Änderungen vorgenommen werden können, insbesondere im Hinblick auf die funktionalen und strukturellen Aspekte der Komponenten, solange sie nicht vom Schutzumfang der Ansprüche abweichen.

### Bezugszeichenliste:

10 Planetenwelle
20 hydrodynamisches Axialgleitlager
30 Stift
40 Verschlussschraube
50 Planetenrad
60 Planetenträger
101 Hydraulikölkammer
102 radiale Ölbohrung
103 axiale Ölbohrung
104 radiale Ölbohrung
105 axiale Ölwanne
106 Hohlraum
107 Umfangsfläche
108 Modifikationszone
109 umlaufende Ölwanne
201 Modifikationszone
202 Ölrücklaufwanne
203 versenkte Bohrung
601 Öleintrittsbohrung

## Patentansprüche

1. Planetengetriebe für eine Windenergieanlage, das eine Planetenwelle (10), ein Planetenrad (40) und einen Planetenträger (50) aufweist, wobei das Planetenrad (40) und der Planetenträger (50) an der Planetenwelle (10) montiert sind, wobei die Umfangsfläche der Planetenwelle (10) in Kontakt mit dem Planetenrad (40) in einen tragenden Bereich und einen nichttragenden Bereich unterteilt sein kann, wobei innerhalb des nichttragenden Bereichs mindestens eine Hydraulikölkammer (101) in axialer Richtung angeordnet ist.

2. Planetengetriebe nach Anspruch 1, **dadurch gekennzeichnet, dass** innerhalb des nichttragenden Bereichs zwei Hydraulikölkammern (101) angeordnet sind und die zwei Hydraulikölkammern (101) in einem Umfangswinkel von 155° voneinander beabstandet sind.

3. Planetengetriebe nach Anspruch 1, **dadurch gekennzeichnet, dass** die Hydraulikölkammer (101) über eine radiale Ölbohrung (104) mit einer axialen Ölbohrung (103) kommuniziert, und die axiale Ölbohrung (103) mit einer Öleintrittsbohrung (601) des Planetenträgers (50) kommuniziert.

4. Planetengetriebe nach Anspruch 3, **dadurch gekennzeichnet, dass** die axiale Ölbohrung (103) eine Durchgangsbohrung ist, und die beiden axialen Enden der axialen Ölbohrung (103) durch Verschlussschrauben (40) verschlossen sind.

5. Planetengetriebe nach einem der Ansprüche 1 bis 4, **dadurch gekennzeichnet, dass** auf der axialen Endfläche der Planetenwelle (10) eine Markierung (110) vorhanden ist.

6. Planetengetriebe nach einem der Ansprüche 1 bis 4, **dadurch gekennzeichnet, dass** auf der Umfangsfläche der Planetenwelle (10) in Kontakt mit dem Planetenrad (40) eine Modifikationszone (108) vorhanden ist.

7. Planetengetriebe nach einem der Ansprüche 1 bis 4, **dadurch gekennzeichnet, dass** nur in dem nichttragenden Bereich eine umlaufende Ölwanne (109) zur Verbindung mit der Hydraulikölkammer (101) angeordnet ist.

8. Planetengetriebe nach Anspruch 7, **dadurch gekennzeichnet, dass** die umlaufende Ölwanne (109) eine Modifikationszone aufweist.

9. Planetengetriebe nach einem der Ansprüche 1 bis 4, **dadurch gekennzeichnet, dass** das Planetengetriebe ferner an den beiden axialen Enden des Planetenrades (40) vorgesehene Axialträger (20) aufweist, wobei auf der axialen Endfläche des Axialträgers (20) in Kontakt mit dem Planetenrad (40) eine Modifikationszone (201) vorgesehen ist.

10. Windenergieanlage, **dadurch gekennzeichnet, dass** die Windenergieanlage ein Planetengetriebe nach einem der Ansprüche 1 bis 9 aufweist.
